# EUROPEAN PATENT SPECIFICATION

(11) **EP 4 084 942 B1**
(45) Date of publication and mention of the grant of the patent: **11.06.2025**
(21) Application number: 20842862.3
(22) Date of filing: 22.12.2020
(51) Int. Cl.: B29C 45/00, C08K 3/22, C08K 3/40, C08K 5/54, C08K 7/14, C08L 23/06, C08L 51/04, C08L 67/02

(54) **POLYMER BLEND**
POLYMERMISCHUNG
MÉLANGE DE POLYMÈRES

(30) Priority: 31.12.2019 US 201962956070 P; 13.05.2020 US 202063024510 P
(43) Date of publication of application: 09.11.2022
(73) Proprietor: DUPONT POLYMERS, INC., Wilmington DE 19805 (US)
(72) Inventor: ORIANI, Steven R., Wilmington, Delaware 19805 (US); SAXENA, Shalini, Wilmington, Delaware 19805 (US)
(74) Representative: Marks & Clerk LLP
(86) International application number: PCT/US2020/066558
(87) International publication number: WO 2021/138141

(56) References cited:
- EP-A2- 0 190 030
- WO-A1-2012/147845

## Description

### FIELD OF THE INVENTION

The present invention is directed to a polymer blend comprising a polyether-polyester block copolymer and the reaction product of a polyacrylate copolymer with an aminosilane; to methods of producing the polymer blends; and to articles that comprise the polymer blends.

### BACKGROUND OF THE INVENTION

Polymer blends are crucial materials for fabricating a wide variety of consumer goods and industrial equipment. Accordingly, improvements in the properties, synthesis, processing, economics, and appearance of polymer blends are of continuing interest and importance.

One well-known method of obtaining improvements in polymer compositions is by blending two or more polymers. The combination of polymers may offer the advantages of one or more of the individual components. For example, a relatively expensive material having desirable physical properties may be combined with a less expensive material to produce a polymer blend with a more favorable balance of cost and performance.

Elastomers are a significant class of polymers with desirable properties and broad applicability across many industries, and blends of various types of elastomers are known. Elastomer blends may include two or more elastomers, or they may include one or more elastomers with one or more non-elastomeric polymers. Elastomer blends may be alloys or solid solutions, for example when the elastomer(s) and the other polymer(s) are miscible. When the blend includes two or more immiscible polymers, other morphologies are possible, such as dispersions and co-continuous blends.

One type of blend that may contain elastomers is a thermoplastic vulcanizate ("TPV"), which includes a thermoplastic phase and a "vulcanized" or cross-linked elastomer phase. TPVs combine many desirable characteristics of crosslinked or vulcanized rubbers with certain characteristics of thermoplastic resins. For example, TPVs can be melt-processed utilizing thermoplastic resin processing equipment, such as for example extruders. As a result of their excellent tear strength, tensile strength, flex life, chemical resistance and broad end-use temperature ranges, TPVs, especially copolyether-ester TPVs such as those described in Int'l. Pat. App. Pub. No. WO2004/029155, are used in a wide range of applications including manufacture of articles for use in the automotive, wire and cable, fluid power, electrical and electronic applications, hose and tubing, and appliance fields.

In this connection, U.S. Patent No. 6,448,343, issued to Schombourg et al.*,* describes a TPV including two polymers, wherein one polymer is grafted or copolymerized with a carboxylic acid anhydride, which acid anhydride-grafted polymer then is reacted with an aminosilane, which reacts with the acid anhydride and then cross-links the one polymer.

In addition, U.S. Patent No. 7,074,857, issued to Bendler et al.*,* describes a curable thermoplastic elastomeric blend comprising a polyalkylene phthalate polyester polymer or copolymer and a polyacrylate or polyethylene/acrylate rubber in combination with an effective amount of peroxide free-radical initiator and an organic diene cross-linking co-agent.

EP 0 190 030 A2 relates to a polybutylene terephthalate composition comprising polybutylene terephthalate, polyacrylate and a silane coupling agent.

WO 2012/147845 A1 relates to an inorganic filler-reinforced polybutylene terephthalate resin composition obtained by combining a specific amount of a polybutylene terephthalate resin, a specific polyethylene resin, a specific reactive polymer and a glass-based inorganic filler.

Thermoplastic vulcanizates and other elastomer blends may be difficult to process, however. Sub-optimal choices of starting materials, reagents, and processing conditions may result in unfavorable properties or results, including, for example, dangerous reagents, such as peroxides; dangerous conditions, such as cross-linking by irradiation; slow reaction rates; polymer degradation, for example by exposure to radiation or free radicals; undesirable stickiness due to inadequate levels of cross-linking or due to polymer degradation; formation of gel defects, black specks, and other impurities; extrusion die instability, manifest as surface roughness in extruded parts or lumps in blow-molded parts; and processing difficulties due to excessive cross-linking, for example rubber scorching.

Accordingly, it remains desirable to produce new polymer blends having tailored properties for use in demanding conditions. It also remains desirable to improve the processes through which these polymer blends are produced to increase their safety and efficiency, and to improve the aesthetic qualities of the polymer blends.

### SUMMARY OF THE INVENTION

Viewed from a first aspect, the present invention provides a polymer blend comprising:
(a) a copolyether-ester copolymer comprising copolymerized residues of a polyalkylene terephthalate and copolymerized residues of a polyether diol; and
(b) the reaction product of a polyacrylate copolymer with an aminosilane; wherein

i) the polyacrylate copolymer comprises at least 0.3 wt% of copolymerized residues of a cure site comonomer, wherein the sum of the weight percentages of the copolymerized residues in the polyacrylate copolymer is 100 wt%; and wherein
ii) the polymer blend comprises from 5 to 70 wt% of the reaction product of the polyacrylate copolymer with the aminosilane, based on the total weight of the polymer blend.

Viewed from a further aspect, the present invention provides a process for making the polymer blend as hereinbefore described, comprising the steps of:
a) mixing one or more polyacrylate copolymers with aminosilane to form a composition; and
b) melt mixing one or more copolyether-ester copolymers with the composition.

Viewed from a further aspect, the present invention provides a process for making the polymer blend as hereinbefore described, comprising the steps of:
a) melt mixing one or more polyacrylate copolymers with one or more copolyether-ester copolymers; and
b) melt mixing the composition of part (a) with aminosilane.

Viewed from a further aspect, the present invention provides an article comprising the polymer blend as hereinbefore described, said article being selected from the group consisting of consumer electronics, including power cord jacketing and strain relief; consumer goods, including footwear outsoles and midsoles; soft touch overmolding for power tools and other hand held devices; wearable applications such as straps or bands; sealing applications such as automotive air intake manifold gaskets; wire and cable applications, such as jacketing; oil and gas flat packs; boots for use in transportation vehicles such as automobiles, including inboard and outboard constant-velocity joint (CVJ) boots, propeller shaft boots, and diaphragm boots; fluid ducts and air ducts for use in transportation vehicles such as automobiles; and other articles for use in the transportation, automotive, fluid power (including fluid power transmission lines), electrical, electronic, hose and tubing, and appliance fields, wherein preferably the article is produced by a method selected from the group consisting of injection molding, blow molding, extrusion, compression molding, press-blow molding, accumulator blow molding, extrusion blow molding, injection-blow molding, and additive manufacturing.

Accordingly, provided herein is a polymer blend comprising a polyester - polyether block copolymer and the reaction product of a polyacrylate copolymer with an aminosilane. The polyester - polyether block copolymer comprises copolymerized residues of polybutylene terephthalate and copolymerized residues of a polyether diol, and the polyacrylate copolymer comprises copolymerized residues of an acid anhydride cure site comonomer.

Further provided are processes for making the polymer blend. In a first process, the polyacrylate copolymer and the aminosilane are combined, and the polyester - polyether block copolymer is added and melt-mixed in a second step. In a second process, the polyester - polyether block copolymer, the polyacrylate copolymer, and the aminosilane are combined in a melt.

Still further provided are articles comprising the polymer blend, for example consumer electronics (power cord jacketing and strain relief); consumer goods, such as footwear outsoles and midsoles; soft touch overmolding for power tools and other hand held devices, wearable applications such as straps or bands, and sealing applications such as automotive air intake manifold gaskets; wire and cable applications, such as jacketing; oil and gas flat packs; auto boots such as inboard and outboard constant-velocity joint (CVJ) boots, propeller shaft boots, and diaphragm boots; and air ducts for use in transportation vehicles such as automobiles. The articles may be manufactured by methods that are typical of fabrication with thermoplastic or thermoset polymers.

### DETAILED DESCRIPTION OF THE INVENTION

Unless otherwise defined, all technical and scientific terms used herein have the same meaning as commonly understood by one of ordinary skill in the art to which this invention belongs. Although methods and materials similar or equivalent to those described herein can be used in the practice or testing of the present embodiments, suitable methods and materials are described below. The materials, methods, and Examples described herein are illustrative only and not intended to be limiting.

As used herein, the terms "comprises," "comprising," "includes," "including," "has," "having," "contains," "containing" or any other variation thereof, refer to a non-exclusive inclusion. For example, a process, method, article, or apparatus that comprises a list of elements is not necessarily limited to those elements, but may include other elements not expressly listed or inherent to such process, method, article, or apparatus.

The transitional phrase "consisting essentially of" limits the scope of a claim to the specified materials or steps and those that do not materially affect the basic and novel characteristic(s) of the claimed invention. "A 'consisting essentially of claim occupies a middle ground between closed claims that are written in a 'consisting of format and fully open claims that are drafted in a 'comprising' format." Where an invention or a portion thereof is described with an open-ended term such as "comprising," it is to be understood that, unless otherwise stated in specific circumstances, this description also includes a description of the invention using the terms "consisting of" and "consisting essentially of".

The term "consisting essentially of" as used herein with respect to phases or compositions refers to phases or compositions that include greater than 95 weight % or greater than 99 weight % of the recited component(s), based on the total weight of the polymer, phase or composition. Thus, polymers, phases or compositions to which this term is applied may include one or more other comonomers, components or additives such those described below, including any carrier(s) that may be introduced with the other component(s) or additive(s). In these amounts, the other comonomer(s), component(s), the additive(s) and their carrier(s) do not change the basic and novel characteristics of the phases or compositions described herein.

Further, unless expressly stated to the contrary, "or" refers to an inclusive "or" and not to an exclusive "or." For example, a condition A or B is satisfied by any one of the following: A is true (or present) and B is false (or not present), A is false (or not present) and B is true (or present), and both A and B are true (or present).

Also, the indefinite articles "a" or "an" are employed to describe elements and components of the invention. This is done merely for convenience and to give a general sense of the invention. This description should be read to include one or at least one and the singular also includes the plural unless expressly stated otherwise in limited circumstances
As used herein, the term "about" means that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such.

In addition, the ranges set forth herein include their endpoints unless expressly stated otherwise in limited circumstances. Further, when an amount, concentration, or other value or parameter is given as a range, one or more preferred ranges or a list of upper preferable values and lower preferable values, this is to be understood as specifically disclosing all ranges formed from any pair of any upper range limit or preferred value and any lower range limit or preferred value, regardless of whether such pairs are separately disclosed.

Moreover, where a range of numerical values is recited herein, unless otherwise stated in specific circumstances, the range is intended to include the endpoints thereof, and all integers, fractions and real numbers within the range. It is not intended that the scope of the invention be limited to the specific values recited when defining a range. Finally, when the term "about" is used in describing a value or an end-point of a range, the disclosure should be understood to include the specific value or end-point that is referenced.

As used herein, the term "copolymer" refers to polymers comprising copolymerized units resulting from copolymerization of two or more comonomers. In this connection, a copolymer may be described herein with reference to its constituent comonomers or to the amounts of its constituent comonomers, for example "a copolymer comprising ethylene and 15 weight % of acrylic acid", or a similar description. Such a description may be considered informal in that it does not refer to the comonomers as copolymerized units; in that it does not include a conventional nomenclature for the copolymer, for example International Union of Pure and Applied Chemistry (IUPAC) nomenclature; in that it does not use product-by-process terminology; or for another reason. As used herein, however, a description of a copolymer with reference to its constituent comonomers or to the amounts of its constituent comonomers means that the copolymer contains copolymerized units (in the specified amounts when specified) of the specified comonomers. The terms "unit" and "residue" are synonymous and used interchangeably herein with respect to the constituent comonomers of a copolymer. It follows as a corollary that a copolymer is not the product of a reaction mixture containing given comonomers in given amounts, unless expressly stated in limited circumstances to be such.

The term "(meth)acrylic", as used herein, alone or in combined form, such as "(meth)acrylate", refers to acrylic or methacrylic, for example, "acrylic acid or methacrylic acid", or "alkyl acrylate or alkyl methacrylate".

The terms "copolyether-ester polymer", "polyether-polyester block copolymer", and "polyester - polyether block copolymer" are synonymous and used interchangeably herein. Some but not all polyester - polyether block copolymers are elastomeric.

As used herein, the term "thermoplastic vulcanizate" ("TPV") refers to a polymeric material having a crosslinked rubber phase dispersed in a continuous thermoplastic phase.

As used herein, the term "polymer blend" refers to a melt-processible polymeric material having a crosslinked rubber phase and a thermoplastic phase.

Provided herein is a polymer blend comprising a copolyether-ester polymer and the reaction product of a polyacrylate copolymer with an aminosilane.

Advantageously, aminosilanes are relatively safe and efficient crosslinking agents. They do not share the disadvantages of free-radical crosslinking, as by peroxides or irradiation. Moreover, the lower reactivity of aminosilanes compared to many peroxides results in safer storage and handling. For example, an aminosilane crosslinking does not suffer inhibition from the presence of antioxidants typical of free-radical reactions. Furthermore, the polymer components in an aminosilane-crosslinked polymer composition do not degrade by reaction with free radicals, and no formation of black specks or other impurities likely resulting from uncontrolled oxidation is observed.

Compared to polyamine crosslinking, aminosilanes also offer several advantages. Ester linkages in copolyether-ester polymers can be degraded by amines, and the decreased amine content of an aminosilane relative to a polyamine minimizes these unwanted side reactions. Furthermore, a polyamine curative that grafts to the polyacrylate copolymer may leave dangling amine functionality that remains reactive upon subsequent processing and that adversely affects extrusion quality of the polymer blend. The silane functionality of an aminosilane is, in contrast, subject to hydrolysis and condensation even at room temperature. Therefore, any residual reactivity is extinguished during storage. Finally, aminosilanes provide a range of options for selecting the reactivity of the two moieties, thereby decreasing the technical effort needed to balance crosslinking for various polymer blends, TPV compositions and processing options.

Suitable polyester - polyether block copolymers are described in Intl. Patent Appln. Publn. No. WO 2020/047406 by Szekely et al. Briefly, however, the suitable polyester - polyether block copolymers have a multiplicity of recurring long-chain ester units and short-chain ester units joined head-to-tail through ester linkages, said long-chain ester units being represented by formula (A): 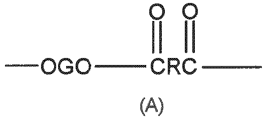 and said short-chain ester units being represented by formula (B): 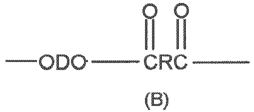 wherein
G is a divalent radical remaining after the removal of terminal hydroxyl groups from poly(alkylene oxide)glycols having a number average molecular weight of between about 400 and about 6000 g/mol, or preferably between about 400 and about 3000 g/mol;
R is a divalent radical remaining after removal of carboxyl groups from a dicarboxylic acid having a molecular weight of less than about 300 g/mol;
D is a divalent radical remaining after removal of hydroxyl groups from a diol having a molecular weight less than about 250 g/mol.

The weight percentages of the copolymerized units of Formula (A) and Formula (B) in the copolyether-ester copolymer are complementary. That is, the sum of the weight percentages of the copolymerized units of Formula (A) and Formula (B) is 100 wt%. Likewise, the mole percentages of the R groups in the copolymerized units of Formula (A) and Formula (B) in the copolyether-ester copolymer are complementary. That is, the sum of the mole percentages of the R groups in the copolymerized units of Formula (A) and Formula (B) is 100 mol%.

As used herein, the term "long-chain ester units" as applied to units in a polymer chain refers to the reaction product of a long-chain glycol with a dicarboxylic acid. Suitable long-chain glycols are poly(alkylene oxide) glycols having terminal (or as nearly terminal as possible) hydroxy groups and having a number average molecular weight of from about 400 to about 6000 g/mol, and preferably from about 600 to about 3000 g/mol. Preferred poly(alkylene oxide) glycols include poly(tetramethylene oxide) glycol, poly(trimethylene oxide) glycol, poly(propylene oxide) glycol, poly(ethylene oxide) glycol, copolymer glycols of these alkylene oxides, and block copolymers such as ethylene oxide-capped poly(propylene oxide) glycol. Mixtures of two or more of these glycols can be used. Long chain ester units of Formula (A) may also be referred to as "soft segments" of a copolyether-ester polymer.

As used herein, the term "short-chain ester units" as applied to units in a polymer chain of the copolyether-esters refers to low molecular weight compounds or polymer chain units having molecular weights less than about 550 g/mol. They are made by reacting a low molecular weight diol or a mixture of diols (molecular weight below about 250 g/mol) with a dicarboxylic acid to form ester units represented by Formula (B) above. Short chain ester units of Formula (B) may also be referred to as "hard segments" of the copolyether-ester polymer.

Preferred low molecular weight diols which react to form short-chain ester units are aliphatic diols containing 2 to 8 carbon atoms, and a more preferred diol is 1,4-butanediol. As used herein, the term "diols" includes equivalent ester-forming derivatives such as those mentioned. For example, ethylene oxide or ethylene carbonate can be used in place of ethylene glycol. The molecular weights refer to the diols, not to the ester-forming derivatives.

Dicarboxylic acids that can react with the foregoing long-chain glycols and low molecular weight diols to produce the copolyether-esters are aliphatic, cycloaliphatic or aromatic dicarboxylic acids of a low molecular weight, i.e., having a molecular weight of less than about 300 g/mol. The term "dicarboxylic acids" as used herein includes functional equivalents of dicarboxylic acids that have two carboxyl functional groups that perform substantially similarly to dicarboxylic acids in reaction with glycols and diols in forming copolyether-ester polymers. These equivalents include esters and ester-forming derivatives such as acid halides and anhydrides. The molecular weight requirement pertains to the acid and not to its equivalent ester or ester-forming derivative.

Aromatic dicarboxylic acids are preferred. As used herein, the term "aromatic dicarboxylic acids" refers to dicarboxylic acids having two carboxyl groups each attached to a carbon atom in a carbocyclic aromatic ring structure. It is not necessary that both functional carboxyl groups be attached to the same aromatic ring and where more than one ring is present, they can be joined by aliphatic or aromatic divalent radicals or divalent radicals such as -O- or -SO₂-.

Suitable aromatic dicarboxylic acids include phthalic, terephthalic and isophthalic acids; other benzoic diacids; substituted dicarboxy compounds with two benzene nuclei such as bis(p-carboxyphenyl)methane; p-oxy-1,5-naphthalene dicarboxylic acid; 2,6-naphthalene dicarboxylic acid; 2,7-naphthalene dicarboxylic acid; 4,4'-sulfonyl dibenzoic acid and C₁-C₁₂ alkyl and ring substitution derivatives thereof, such as halo, alkoxy, and aryl derivatives. Hydroxy acids such as p-(beta-hydroxyethoxy) benzoic acid can also be used provided an aromatic dicarboxylic acid is also used. Aromatic acids with 8 to 16 carbon atoms are preferred, and more preferred are terephthalic acid, isophthalic acid, and mixtures of phthalic acid and isophthalic acid.

The copolyether-ester polymer preferably comprises from at or about 15 to at or about 99 weight percent of copolymerized short-chain ester units corresponding to Formula (B), above, based on the total weight of the copolyether-ester, wherein the remainder of the weight of the copolyether-ester is made up of copolymerized long-chain ester units corresponding to Formula (A), above. More preferably, the copolyether-ester polymers comprise from at or about 20 to at or about 95 weight percent, and even more preferably from at or about 30 to at or about 90 weight percent, or from at or about 50 to at or about 90 weight percent of copolymerized short-chain ester units, again wherein the remainder of the weight of the copolyether-ester is made up of copolymerized long-chain ester units.

More preferably, at least about 70 mole % of the divalent radical groups represented by R in Formulae (A) and (B) above are 1,4-phenylene diradicals, and at least about 70 mole % of the groups represented by D in Formula (B) above are 1,4-butylene radicals. In this more preferred copolyether-ester, the sum of the mole percentages of R groups which are not 1,4-phenylene diradicals and of D groups that are not 1,4-butylene radicals does not exceed the unitless value of 30.

When a mixture of two or more dicarboxylic acids is used to prepare the copolyether-ester, isophthalic acid is a preferred second dicarboxylic acid. More preferred is a mixture of isophthalic acid and terephthalic acid. The amount of copolymerized isophthalate residues in the copolyether-ester is preferably less than 35 or less than 30 mole %, more preferably less than 25 mole %, with the remainder of the at least 70 mole% of phenylene diradicals being derived from terephthalic acid, in the preferred mixture for example, based on the total number of moles of copolymerized dicarboxylic acid residues -(-C(O)RC(O)-)- in the copolyether-ester. In some preferred embodiments, copolymerized isophthalate residues in the copolyether-ester is less than 35 wt%, more preferably less than 25 wt%, based on the total weight of copolymerized dicarboxylic acid residues -(-C(O)RC(O)-)- in the copolyether-ester. Again, the remainder of the phenylene diradicals is derived from terephthalic acid, in the preferred mixture for example, based on the total weight of copolymerized dicarboxylic acid residues - (-C(O)RC(O)-)- in the copolyether-ester.

Preferred polymer blends comprise copolyether-ester polymers prepared from monomers comprising (1) poly(tetramethylene glycol) or poly(trimethylene glycol), poly(propylene glycol), poly(ethylene glycol), glycols comprising residues of propylene oxide and ethylene oxide (an EO/PO glycol), and mixtures of two or more of these; (2) a dicarboxylic acid selected from the group consisting of isophthalic acid, terephthalic acid and mixtures of two or more of these; and (3) a diol selected from the group consisting of 1,4-butanediol, 1,3-propanediol and mixtures of two or more of these. Also, in preferred polymer blends, the copolyether-ester polymer(s) are thermoplastic, i.e., they are melt processable and exhibit a melting peak temperature.

Particularly preferred is a copolyether-ester having hard segments composed of polybutylene terephthalate and approximately 5 or 10% to about 70 or 80% by weight of soft segments composed of the reaction product of a polyether glycol and an aromatic diacid, preferably about 10 or 20 to about 60 wt%. The polyether blocks are derived from polytetramethylene glycol and have a molecular weight of approximately 1000g/mol to 2000g/mol. Complementarily, the fraction of hard segments is approximately 20% or 30% to 90 or 95% by weight, preferably about 40 to about 80 or 90 wt%.

Suitable polyether - polyester copolymers are commercially available from DuPont Specialty Products USA, LLC, of Wilmington, DE, under the Hytrel^{®} trademark.

The polymer blends described herein also contain the reaction product of one or more polyacrylate copolymers with an aminosilane. Suitable polyacrylate copolymers are described in U.S. Patent No. 8,779,044, issued to Steven R. Oriani. Briefly, however, suitable acrylate copolymers are amorphous and comprise
a) at least 45 wt% or at least 50 wt%, based on the total weight of the amorphous acrylate copolymer, of copolymerized units of at least one monomer having the structure: 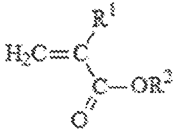 wherein R¹ is H or C₁-C₁₀ alkyl and R² is C₁-C₁₂ alkyl, C₁-C₂₀ alkoxyalkyl, C₁-C₁₂ cyanoalkyl, or C₁-C₁₂ fluoroalkyl; and
b) copolymerized units of one or more cure site comonomers selected from the group consisting of unsaturated carboxylic acids and anhydrides of unsaturated carboxylic acids.

The polyacrylate copolymer is preferably amorphous. The term "amorphous" as used herein to describe polyacrylate copolymers refers to copolymers that exhibit little or no crystalline structure at room temperature in the unstressed state. Alternatively, an amorphous material has a heat of fusion of less than 4 J/g, as determined according to ASTM D3418-08.

Preferred polyacrylate copolymers comprise copolymerized units of a) at least one alkyl ester or alkoxyalkyl ester of propenoic acid and b) a cure site monomer. Examples of suitable alkyl and alkoxyalkyl esters of propenoic acid include alkyl acrylates and alkoxyalkyl acrylates as well as species wherein the propenoic acid is substituted with a C₁-C₁₀ alkyl group. Examples of such species include alkyl methacrylates, alkyl ethacrylates, alkyl propacrylates, and alkyl hexacrylates, alkoxyalkyl methacrylates, alkoxyalkyl ethacryates, alkoxyalkyl propacrylates and alkoxyalkyl hexacrylates. The polyacrylate copolymers may also comprise copolymerized units of more than one species of the alkyl esters or alkoxyalkyl esters, for example two alkyl acrylates, or may contain an a-olefin such as propene, 1-butene, 1-hexene, or the like.

The alkyl and alkoxyalkyl esters of propenoic acid and substituted propenoic acids are preferably C₁-C₁₂ alkyl esters of acrylic or methacrylic acid or C₁-C₂₀ alkoxyalkyl esters of acrylic or methacrylic acid. Examples of preferred esters include methyl acrylate, methyl methacrylate, ethyl acrylate, ethyl methacrylate, butyl acrylate, butyl methacrylate, 2-ethylhexyl acrylate, 2-methoxyethylacrylate, 2-ethoxyethylacrylate, 2-(n-propoxy)ethylacrylate, 2-(n-butoxy)ethylacylate, 3-methoxypropylacrylate and 3-ethoxypropyl-acrylate. More preferably, the ester group comprises branched or unbranched C₁-C₈ alkyl groups. Still more preferably, the ester group comprises unbranched C₁-C₄ alkyl groups. Still more preferred alkyl (meth)acrylate esters include methyl acrylate, methyl methacrylate, ethyl acrylate and butyl acrylate.

The amount of propenoic acid ester comonomers in the polyacrylate copolymer is at least 45 wt% or at least 50 wt%, based on the total weight of the polyacrylate copolymer. Preferably, the concentration will be at least 55 wt%, and more preferably at least 60 wt%. If the concentration of propenoic acid ester is below 45 or 50 wt%, the likelihood that some crystallinity will be present is high, for example in the polyethylene/acrylate rubbers described below. Crystallinity in the polyacrylate copolymer or in the polyethylene/acrylate rubber may diminish the elastic properties of the reaction product of the polyacrylate copolymer or the polyethylene/acrylate rubber with the aminosilane, or it may diminish the elastic properties of the polymer blend.

The polyacrylate copolymers useful in the practice of the invention further comprise copolymerized cure site monomer units selected from the group consisting of unsaturated carboxylic acids, anhydrides of unsaturated carboxylic acids, unsaturated epoxides, and mixtures of two or more thereof. These cure site monomer units contain functional groups that may react with amines or other nitrogen-containing species, such as carbamates.

Suitable unsaturated carboxylic acids include, without limitation, acrylic acid and methacrylic acid, 1,4-butenedioic acids, citraconic acid, and monoalkyl esters of 1,4-butenedioic acids. The 1,4-butenedioic acids may exist in *cis-* or *trans-* form or both prior to polymerization, for example a mixture of maleic acid or fumaric acid. Suitable cure site comonomers also include anhydrides of unsaturated carboxylic acids, for example, maleic anhydride, citraconic anhydride, and itaconic anhydride. Preferred cure site monomers include maleic acid and any of its half acid esters (monoesters) or diesters, particularly the methyl or ethyl half acid esters (e.g., monoethyl maleate); fumaric acid and any of its half acid esters or diesters, particularly the methyl, ethyl or butyl half acid esters; and monoalkyl and monoarylalkyl esters of itaconic acid. Preferred polyacrylate copolymers include 0.3 or 0.5 to 10 wt%, or 1.0 or 1.5 to 8 wt%, or 1.7 or 2 to 5 wt% of copolymerized residues derived from one or more cure site comonomers.

Preferred polyacrylate copolymers consist of, or consist essentially of, copolymerized units of propenoic acid ester(s) and cure site comonomer(s).

Suitable acrylate copolymers are commercially available under the tradenames HyTemp^{™} elastomers, manufactured by Zeon Chemicals L.P., of Louisville, KY, and Noxtite^{™} ACM acrylic rubber, available from Unimatec Chemicals America, Inc., of Novi, MI.

Polyethylene/acrylate rubbers are a preferred class of polyacrylate copolymers. In addition to comprising the acrylate ester(s) and the cure site comonomer(s), as described above and in the amounts described above, the suitable polyethylene/acrylate rubbers further comprise 85 mol% or less, or 82 mol% or less, of copolymerized units derived from ethylene, based on the total number of moles of copolymerized comonomer units in the polyethylene/acrylate rubber.

Preferred polyethylene/acrylate rubbers include 45 wt% or more, or 50 wt% or more, of copolymerized residues derived from one or more alkyl acrylates and at least 0.1 mol%, 0.3 mol% or 0.5 mol% of copolymerized residues derived from one or more cure site comonomers, based on the total weight of the polyethylene/acrylate rubber. More preferably, the polyethylene/acrylate rubbers include 45 to 80 wt%, or 50 to 70 wt%, or 50 to 65 wt% of copolymerized residues derived from one or more alkyl acrylates. Branched or unbranched alkyl groups containing 1 to 6 carbon atoms, are preferred, and unbranched alkyl groups containing 1 to 4 carbon atoms are more preferred. In addition, preferred polyethylene/acrylate rubber s include 0.3 or 0.5 to 10 wt%, or 1.0 or 1.5 to 8 wt%, or 1.7 or 2 to 5 wt% of copolymerized residues derived from one or more cure site comonomers. The remainder of the polyethylene/acrylate rubber consists of or consists essentially of copolymerized units of ethylene.

Suitable polyethylene/acrylate rubbers are commercially available from DuPont Specialty Products USA, LLC, of Wilmington, DE, under the Vamac^{®} trademark.

Suitable aminosilanes have at least one hydrolyzable group, e.g., alkoxy, acetoxy or halo, preferably alkoxy, appended to a silicon atom. Preferably, there are at least two such hydrolyzable groups capable of undergoing crosslinking condensation reaction. The amine moiety must have a sufficient rate of reaction with the cure site comonomer. Generally, tertiary amines react sluggishly with preferred cure site comonomers and for this reason are less favored. A mixture of two or more different aminosilanes may be used.

The aminosilane may be represented by the formula YNHBSi(OR)ₐ(X)₃₋ₐ, wherein a=1 to 3, preferably 2 or 3; Y is hydrogen, an alkyl, alkenyl, hydroxy alkyl, alkaryl, alkylsilyl, alkylamine, C(=O)OR or C(=O)NR; R is an acyl, alkyl, aryl or alkaryl group; X may be R or a halogen atom; B is a divalent bridging group, which preferably is an alkylene group. Suitable alkylene groups for B are unbranched, branched (e.g., neohexylene), or cyclic (e.g., cyclohexylene). B may contain heteroatom bridges, e.g., an ether bond. Preferably, B is a propylene moiety (-C₃H₆-). Preferably, R is a methyl or ethyl group. Preferably, Y is an aminoalkyl, hydrogen, or alkyl group. More preferably, Y is a hydrogen or a primary aminoalkyl group (e.g., aminoethyl). Preferably, X is a chlorine atom or a methyl group, more preferably a methyl group.

Preferred aminosilanes for reaction with the polyacrylate copolymer include, without limitation, (3-aminopropyl)trimethoxysilane, (3-aminopropyl)triethoxysilane, N-β-(aminoethyl)-γ-aminopropyl-trimethoxysilane, N-(β-aminoethyl)-γ-aminopropylmethyldimethoxysilane, vinylbenzylaminoethylamino-propyltrimethoxysilane, bis(trimethoxysilylpropyl)amine, and mixtures of two or more thereof. Suitable aminosilanes are commercially available from the Dow Chemical Company of Midland, MI; from MilliporeSigma of St. Louis, MO; and under the tradename SILQUEST^{™} from Momentive Performance Materials, Inc., of Waterford, NY.

Without wishing to be bound to theory, it is hypothesized that the amine group of the aminosilane reacts with the dicarboxylic acid group or derivative to form an imide group along the backbone of the polyacrylate copolymer. The silane group of the aminosilane is pendent from the nitrogen of the imide, which also originated with the aminosilane reagent. It is further hypothesized that two or more pendent silane groups may react to form covalent silane-oxygen-silane linkages, with the elimination of one or more X-H or R-H molecules such as alkanol, arylalkanol, carboxylic acid, or haloacid molecules, thus cross-linking the polyacrylate copolymer. The cross-link may be formed by a single -[-Si-O-Si-]- moiety, or it may be formed by reaction of a number of alkoxysilane groups to form a siloxane network comprising three or more silicon atoms. Such reactions are described, for example, by Xiangke Shi et al. in Silicon (2012) 4:109-119.

The molar ratio of aminosilane to dicarboxylic acid cure site of the polyacrylate copolymer in the reaction mixture is preferably within the range of 0.2 to 1.5, more preferably within the range of 0.2 to 1.0, still more preferably within the range of 0.25 to 0.8. Significantly, adding an excessive amount of aminosilane to the reaction mixture may result in a poor surface appearance of molded or extruded articles due to premature crosslinking and inadequate dispersion of the polyacrylate copolymer in the polymer blend. Also significantly, adding an insufficient amount of aminosilane to the reaction mixture may result in the production of a sticky polymer blend that can be processed only with difficulty, if at all.

The copolyether-ester polymer and the reaction product of the polyacrylate copolymer with the aminosilane may be combined in any relative amount, depending on the desired properties of the polymer blend. Preferably, the ratio of the weight of the copolyether-ester polymer and the weight of the reaction product of the polyacrylate copolymer with the aminosilane will be between 0.5:1 to 19:1, or more preferably between 0.66:1 to 19:1, most preferably between 1:1 to 4:1 or between 1.5:1 to 4:1. Alternatively, based on the sum of the weights of copolyether-ester, polyacrylate copolymer, and aminosilane, the copolyester-ether is preferably present in the polymer blend from about 30wt% to 95wt%, more preferably from 40wt% to 95wt%, and still more preferably from 50wt% to 80wt%.

For the purpose of calculating the weight percentage of the reaction product of polyacrylate copolymer with aminosilane, the weight of the reaction product is the same as the weight of the starting materials, i.e., the polymer(s) and aminosilane(s) added during production of the polymer blend, neglecting the fate of minor evolved molecules, which are typically alcohols and water generated by the condensation of the silane groups and reaction of the amine with the carboxylic acid cure site of the polyacrylate copolymer. Depending on the degree of devolatilization during production of the polymer blend, these molecules may be removed or may become part of the blend via transesterification.

The blend of the copolyether-ester polymer and the reaction product of the polyacrylate copolymer with the aminosilane may further comprise one or more other components such as additives, fillers, process aids, plasticizers, stabilizers, viscosity modifiers, colorants, pigments of any type or level needed to meet technical requirements. Of particular utility in durable applications are anti-oxidants, specifically phenolic, phosphite, and amine-containing anti-oxidants. These other component(s) may be added at any stage during production of the blend, or in a subsequent processing step, in amounts that are conventional in the art. The reaction between the aminosilane and the polyacrylate copolymer may be carried out in a blending process, for example in a two-roll rubber mill or by using internal mixers suitable for compounding gum rubber compositions, including Banbury^{™} internal mixers, Haake Rheocord^{™} mixers, Brabender Plastograph^{™} mixers, Farrel Continuous Mixers, Buss^{™} Kneaders, or single and twin-screw extruders. Twin-screw extruders are preferred. Preferably, one or more polyacrylate copolymers are fed to the extruder, followed by injection of one or more aminosilanes into the polymer.

The extruder barrel temperatures prior to aminosilane injection are preferably 150°C or less while downstream of the injection point the barrel temperature is preferably 150°C or greater. Injecting the aminosilane where the extruder temperature set point is 150°C or less ensures the aminosilane can be mixed with the polyacrylate copolymer before silane condensation occurs, which in turn improves the efficiency of the aminosilane crosslinking so that less aminosilane is needed to achieve a given state of cure. At temperatures of 150°C or greater, the aminosilane grafts to the polyacrylate copolymer via amine reaction with the cure site, and the silane rapidly condenses to form crosslinks. The copolyester-ether polymer may be added at any point prior to the extruder discharge. Preferably, the copolyester-ether polymer is added where the barrel temperature is 150°C or less, so the silane condensation substantially takes place at the same time the copolyester-ether polymer is melting and mixing.

The aminosilane(s) may optionally be diluted with one or more non-reactive solvents or carriers as needed. Suitable solvents and carriers include, without limitation, anhydrous toluene, anhydrous ethanol, and acetone. The concentration of the aminosilane(s) in the solvent(s) or carrier(s) may range from about 10 wt% to about 95 wt%, based on the total weight of the aminosilane(s) and the solvent(s) or carrier(s).

Extruder screw design should be adequate to uniformly mix the liquid aminosilane with polymer at the injection point and downstream. In the section of extruder screw where the polyacrylate undergoes crosslinking, high work elements such as kneading blocks are preferably used to ensure the crosslinked elastomer disperses in the copolyether-ester polymer. Other screw elements such as reverse elements, gear mixers, forwarding elements, and blister rings are well known to those skilled in the art of reactive extrusion for controlling the degree of mixing, temperature, and residence time of the polymeric reaction mixture, reaction product, or blend in the extruder. Preferably, the extruder has at least one vacuum vent port to extract volatiles generated by the cure reaction. Extruder screw speed may be varied over a wide range, typically from 200 to 600 RPM, more preferably from 250 to 400 RPM. Preferably, the barrel temperatures are set between 100°C to 240°C.

Catalysts for accelerating the reactions occurring during production of the polymer blend may also be added at any point in the process. For example, catalysts suitable for accelerating the reaction of amines with the cure site of the polyacrylate copolymer are preferably added prior to, contemporaneously with, or essentially contemporaneously with the addition of the aminosilane, so that the aminosilane reacts with the cure sites of the polyacrylate copolymer prior to formation of siloxane linkages via condensation of the silane. Suitable catalysts are well known in the art as accelerators for the polyamine curing of polyacrylate copolymers. Some suitable catalysts are described in U.S. Patent No. 3,883,472, for example. Tertiary amines comprise a preferred class of catalysts for the accelerating the grafting of aminosilane to polyacrylate copolymer. A particularly preferred catalyst is 1,8-diazabicyclo[5.4.0]undec-7-ene (DBU). Preferably, the polymer blend includes at least an effective amount of a catalyst to accelerate the reaction of amine with the cure site of a polyacrylate copolymer. The catalyst may be present in an amount of 1 part by weight (pbw) to 50 pbw, based on the weight of the aminosilane. More preferably, the catalyst is present in an amount of 1 pbw per 5 pbw of aminosilane.

Catalysts for accelerating the formation of siloxane linkages may also be added at any point during the production of the polymer blend. Suitable catalysts are well known in the art, as described by S. Levigoureux, P. Garcia, M. Ficquenet, and I. Denizet, "Catalyst alternatives to replace DBTDL and crosslink speed improvement of a low voltage cable insulation", 9th International Conference on Insulated Power Cables, Versailles, France, June 2015. Such catalysts include sulfonic and carboxylic acids, metal hydroxides, and organotin compounds. Nevertheless, catalysts for siloxane formation are preferably absent from the polymer blend, at least in part because they may catalyze unwanted hydrolysis or alcoholysis of the copolyester-ether polymer as water and alcohols evolve from the silane condensation and reaction of amine with the elastomer cure site.

Process conditions and aminosilane levels used for making the polymer blends described herein may be modified to achieve a wide range of technical goals. Inadequate crosslinking of the polyacrylate copolymer can result in a blend that is too sticky to pelletize, or if pelletized, the blend may undergo massing or clumping of the pellets. These problems may be addressed by increasing the aminosilane content, by including a catalyst to increase the reaction rate of amine with the elastomer cure site, or by altering the conditions under which the aminosilane is added to ensure the aminosilane becomes fully mixed with the polyacrylate copolymer prior to inducing silane condensation. As a general rule, the tensile strength and extensibility of the blend is optimized at aminosilane levels slightly greater than the minimum needed to produce non-massing pellets. Higher aminosilane levels tend to increase modulus of the blend, while lowering the extensibility.

Scientists and engineers skilled in the art of reactive extrusion may apply conventional principles of extruder operation, screw design, and methods for feeding the raw materials to the extruder, to arrive at acceptable operating parameters to meet the technical requirements of the producing the polymer blends described herein. For example, design of the aminosilane injection system is preferably resistant to clogging and provides a continuous steady flow. The extruder screw preferably incorporates elements such as kneading blocks to quickly and uniformly mix the aminosilane into the polymer(s). Reverse elements and gear mixers may be used to increase residence time in this section to ensure grafting of the aminosilane and elastomer. The screw section involved in melting and mixing of the copolyether-ester copolymer with the polyacrylate copolymer and aminosilane should incorporate kneading blocks, reverse elements, or other high-work elements to ensure good dispersion of the elastomer in the copolyether-ester copolymer. Extruder feed rates, output, screw RPM, and melt temperature also affect residence time and mixing, as is well known to those skilled in the art. Typical extruder screw speeds may be in the range of 100 to 500 RPM, more typically 200 to 400 RPM. Polymer temperatures at the extruder exit are typically in the range of 240°C to 315°C, 240°C to 300°C, preferably 250°C to 290°C.

In addition, the as-obtained polymer blend may be post-processed to increase viscosity by solid-state polymerization. In this technique, the polymer blend is exposed to temperatures approximately 10°C to 40°C less than the melting peak temperature of the copolyether-ester polymer for a time sufficient to promote esterification of residual hydroxyl and carboxylic acid residues, thereby increasing the viscosity of the polymer blend.

The polymer blend may be characterized by a variety of morphologies, ranging from discrete cross-linked elastomer particles dispersed within the copolyester-ether polymer matrix, to co-continuous phases comprising lightly crosslinked elastomer and copolyester-ether, to mixtures of these morphologies. Some of these morphologies may be unsuitable for use in the articles described herein, because they may result in a material that is difficult to further compound, or because they may exhibit poor elastic properties, such as a tensile elongation to break of less than 100%, or because they may exhibit poor aging behavior, or because the morphology is unstable, e.g., it may coarsen as the polymer blend is held quiescent above the melting peak temperature of the copolyester-ether copolymer. Most preferably, the reaction product of the aminosilane and polyacrylate copolymer is present in the polyester-ether block copolymer as discrete particles. In this morphology, the polymer blend is a thermoplastic vulcanizate or TPV.

In general, the extent of distribution and dispersal of the reaction product in the copolyether - polyester block copolymer may be evaluated by molding test tensile specimens and measuring the tensile strength of the polymer blend. The mechanical performance of the polymer blend may be evaluated via load frame, such as an Instron tensile tester, in accordance with ISO-527-1 (2019) using injection-molded 5A samples and a 20 mm/min pull speed. A poor dispersion of the reaction product of aminosilane with polyacrylate copolymer reduces the tensile strength of the blend. While tensile strength is also a function of the type and level of the copolyester-ether polymer in the blend, one of ordinary skill in the art can apply these principles and techniques to optimize the blend properties.

Preferred polymer blends exhibit a stable morphology when held quiescent at temperatures greater than the melting peak temperature of the copolyester-ether copolymer. Blends with unstable morphologies display marked roughening, formation of lumps, or other distortions of the extrudate under these conditions. Stability of the blend morphology may be evaluated using a single screw extruder fitted with a tape die. The blend composition under test is extruded at a consistent rate and a sheet or tape sample is collected. The extruder screw(s) are then stopped for a period of time while the blend is held at temperature, and a second sample is collected immediately upon re-starting the extruder. Most preferably, both extrudates have a visually smooth appearance, unchanged by the quiescent hold-up period. Less preferably, the initial sample is smooth while the second sample is rough, lumpy, or distorted. Least preferably, both samples exhibit rough, lumpy, or distorted extrudates.

By altering the type and weight ratio of the copolyether-ester copolymer and polyacrylate copolymer, the polymer blends described herein may range from soft (approximately 60 Shore A) highly elastic thermoplastic elastomers to stiffer (approximately 70 Shore D) flexible plastics. In general, the strength and stiffness of the polymer blends decrease with increasing content of the elastomeric reaction product polyacrylate copolymer with the aminosilane, while resistance to hot air and hot water aging improves. The inventive polymer blends described herein display superior resistance to hot air and hot water aging compared to a neat copolyester-ether polymer of the same hardness.

The polymer blends described herein can be used in a wide variety of industrial applications, for example for the production of articles including wire and cable jacketing; consumer electronics; consumer goods, such as footwear; oil and gas flat packs; air ducts and boots, including inboard and outboard CVJ (continuous-velocity joint) boots, diaphragm boots, and propeller-shaft boots, for use in transportation vehicles such as automobiles; soft touch, wearable, and sealing applications; fluid and air ducts for use in transportation vehicles such as automobiles; and other articles for use in the automotive, fluid power (such as fluid power transmission lines), electrical/electronic, hose and tubing, and appliance fields.

These articles may be produced using methods that are conventional for fabricating articles from thermoplastic polymeric materials, such as, for example, injection molding, blow molding, extrusion, compression molding, press-blow molding (Ossberger molding), accumulator blow molding, extrusion blow molding, or injection-blow molding.

The following examples are provided to describe the invention in further detail. These examples, which set forth a preferred mode presently contemplated for carrying out the invention, are intended to illustrate and not to limit the invention.

### EXAMPLES

### Materials

Copolyester-ether A comprises copolymerized residues of 2000 g/mol PTMEG (72.5wt%), terephthalic acid (18.4 wt%), and 1,4-butanediol (9.1 wt%). The polymer comprises about 22.6wt% short chain ester units (hard segment) and 77.4wt% long chain ester units (soft segment) and has a melting peak temperature of 177°C.

Copolyester-ether B comprises copolymerized residues of 1000 g/mol PTMEG (7.8wt%), terephthalic acid (55.8 wt%), and 1,4-butanediol (36.4 wt%). The polymer comprises about 91wt% short chain ester units and 9wt% long chain ester units, and has a melting peak temperature of 221°C.

Copolyester-ether C comprises copolymerized residues of 2000 g/mol PTMEG (50.6wt%), terephthalic acid (31 wt%) and 1,4-butanediol (18.4 wt%). The polymer comprises about 46wt% short chain ester units, and 54wt% long chain ester units, and is subjected to a solid state polymerization process to increase molecular weight. The polymer has a melting peak temperature of 198°C.

Polyethylene/acrylate rubber A comprises 55 wt% copolymerized units of methyl acrylate, 3.1wt% copolymerized units of a cure site monomer having carboxylic acid functionality, and the remainder copolymerized units of ethylene. The polymer is amorphous and does not exhibit a melting peak temperature.

Polyethylene/acrylate rubber B comprises 23 wt% of copolymerized units derived from methyl acrylate, 41 wt% of copolymerized units derived from butyl acrylate, 3.2 wt% of copolymerized units of cure site comonomer having carboxylic acid functionality, and the remainder copolymerized units of ethylene. The polymer is amorphous and does not exhibit a melting peak temperature.

Polyacrylate copolymer A comprises 54wt% ethyl acrylate, 44wt% butyl acrylate, and 2wt% of a cure site monomer having carboxylic acid functionality. The polymer is amorphous and does not exhibit a melting peak temperature.

PBT is polybutylene terephthalate available from DuPont de Nemours, Inc., of Wilmington, Delaware, as Crastin^{®} 6129.

Aminosilane A is 3-aminopropyltriethoxysilane, available from Sigma-Aldrich Corporation Aminosilane B is 3-aminopropyltrimethoxysilane, available from Sigma-Aldrich Corporation Diamine is 2,2,4(2,4,4)-Trimethyl-1,6-hexanediamine, available from Sigma-Aldrich Corporation

DBU is a tertiary amine catalyst 1,8-diazabicyclo[5.4.0]undec-7-ene, available from Sigma-Aldrich Corporation

### Test Methods

Pellets were dried overnight or for at least 4 or 6 hours in a vacuum oven between 80°C to 90°C prior to injection-molding. Materials were injection molded on an Arburg 1.5 oz machine. The barrel temperatures were set above the melting peak temperature of the copolyether-ester polymer as determined by the method of ASTM D3418-15.

The tensile properties (tensile strength, elongation at break) of the polymer blends were evaluated via an Instron^{™} tensile tester in accordance with ISO-527-1 (2019) using injection-molded 5A bars and a 20 mm/min pull speed. The flexibility of the polymer blends was evaluated via an Instron^{™} flexural modulus tester in accordance with ISO-178 (2019) using injection-molded 4 mm multi-purpose bars and a testing speed of 1.270 mm/min. The hardness (Shore A and Shore D) of the polymer blends was evaluated using the standard conditions described in ISO-868 (2003) with a modification where peak (initial) hardness is reported in lieu of hardness after 15 sec using injection-molded 4 mm multi-purpose bars or 5A bars. All samples were conditioned in accordance with their ISO standards.

Extrusion quality and stability of the polymer blends are evaluated using a 19.1mm diameter single screw extruder fitted with a 25.4mm x 0.8mm tape die. The extruder barrel has three heat zones, and the die has a single heat zone. Temperatures are set as described in the examples, typically increasing from the feed zone to the die, where the final extruder and die temperature setting is about 20°C greater than the melting peak temperature of the copolyether-ester copolymer in the blend under test. Extrusion quality is evaluated by collecting two types of air-cooled extruded tapes:
Tape 1 - collected while the extruder is running at 25rpm at steady state.
Tape 2 - screw rotation is stopped for 5 minutes after Tape 1 is collected, then restarted at 25rpm. Tape 2 is the extrudate collected immediately upon start-up.
The appearance of the tapes is visually rated according to the following descriptions:
Smooth surface has a shiny appearance with no ridges, lumps, waves, or other imperfections
Matte surface has a dull appearance but otherwise free of imperfections
Rough surface has ridges, waves, lumps, or other imperfections that may be continuous or intermittent

### Example 1

Examples E1, E2 and E3 in Table I demonstrate the use of copolyester-ether copolymer with high soft segment content to produce low hardness thermoplastic elastomers with good physical properties and extrusion quality. These examples further demonstrate the advantages of using a catalyst in conjunction with aminosilane. The polymer blends in Table I were produced using a 30mm co-rotating twin screw extruder with 12 barrel zones, operating at 300rpm and 10.9kg/hr output rate. Copolyester-ether copolymer was fed to barrel zone 1, polyethylene/acrylate rubber fed to barrel zone 4, and aminosilane or diamine crosslinker fed to barrel zone 5. Temperature setpoints for barrel zones 1 through 7 were 100°C, while zones 8 through 12 were set to 220°C. The polymer blends were extruded through a strand die set at 220°C and the resulting strand was cooled in a water bath and pelletized. Where catalyst was used, it was pre-mixed with the aminosilane or diamine.

The extrusion quality of the polymer blends in Table I were evaluated using a single screw extruder with temperature settings of 170°C, 180°C, and 190°C (feed zone to discharge) and a tape die with a temperature setting of 190°C. The polymer blends of Examples E1, E2, and E3 extrude smoothly both before and after a 5-minute extruder hold-up (Tapes 1 and 2), while Tape 2 of comparative example CE1 is rough and poor quality.

The combination of DBU catalyst and aminosilane in Examples E1 and E3 yields polymer blends having tensile strength superior to the blends including aminosilane only (E2), or the combination of DBU catalyst and diamine (CE1). The use of DBU catalyst also decreases the aminosilane level needed to produce non-sticky, free flowing pellets. Examples E1, E2, and E3 use the minimum aminosilane content needed to produce free flowing pellets. In the absence of catalyst, E2 requires more than 20% more primary amine equivalents from aminosilane than does E1 or E3.

**Table I**

| | E1 | E2 | E3 | CE1 |
|---|---|---|---|---|
| | wt % | wt % | wt % | wt % |
| Copolyester-ether A | 59.45 | 59.48 | 59.5 | 54.78 |
| Polyethylene/acrylate rubber A | 39.60 | 39.65 | 39.67 | 44.64 |
| Diamine | | | | 0.29 |
| Aminosilane A | 0.83 | | | |
| Aminosilane B | | 0.87 | 0.71 | |
| DBU catalyst | 0.12 | | 0.12 | 0.29 |
| | | | | |
| mols amine/Kg of elastomer | 0.095 | 0.122 | 0.103 | 0.082 |
| | | | | |
| Shore A hardness (peak) | 71 | 68 | 71 | 69 |
| Tensile at break (MPa) | 13.6 | 12.3 | 15.1 | 12.8 |
| Elongation at break (%) | 320 | 395 | 390 | 365 |
| | | | | |
| Extrusion Tape 1 | smooth | smooth | smooth | smooth |
| Extrusion Tape 2 | smooth | smooth | smooth | rough |

### Example 2

The polymer blends in Table II were produced according to the process conditions described in Example 1, with one exception: the twin screw extruder barrel zone 8 through 12 temperatures were increased from 220°C to 240°C. Tape extrusion used a temperature profile of 220°C, 230°C, and 240°C (feed zone to discharge) and a tape die with a temperature setting of 240°C to accommodate the higher melting peak temperature of Copolyester-ether B.

Examples E4 and E5 in Table II demonstrate the use of a copolyester-ether copolymer having a low soft segment content, with and without DBU catalyst. Consistent with the results in Example 1, the combination of DBU catalyst and aminosilane permits the use of lower aminosilane level while increasing the tensile strength and elongation to break of the polymer blend. Both E4 and E5 exhibit excellent tape extrusion quality, with no roughening after a five minute hold-up (extrusion Tape 2).

Comparative example CE2 uses a conventional diamine curative and exhibits poor extrusion quality in extrusion Tape 2. Comparative example CE3 substitutes the copolyester-ether copolymer of E4 with polybutylene terephthalate homopolymer (PBT). Surprisingly, even though Copolyester-ether B differs compositionally from PBT by the presence of only 7.8wt% PTMEG, CE3 exhibits far inferior flexibility and extensibility than E4. Because the present invention aims to provide solutions for tailored polymer blends for demanding solutions, the use of copolyester-ether copolymers provides far greater formulation flexibility than homopolymer polyesters.

**Table II**

| | E4 | E5 | CE2 | CE3 |
|---|---|---|---|---|
| | wt % | wt % | wt % | wt% |
| Copolyester-ether B | 49.53 | 49.5 | 49.8 | |
| PBT | | | | 49.53 |
| Polyethylene/acrylate rubber A | 49.53 | 49.5 | 49.8 | 49.53 |
| Diamine | | | 0.4 | |
| Aminosilane A | 0.82 | 1 | | 0.82 |
| DBU catalyst | 0.12 | | | 0.12 |
| | | | | |
| mols amine/Kg of elastomer | 0.075 | 0.091 | 0.101 | 0.075 |
| | | | | |
| Tensile at break (MPa) | 19.7 | 16.9 | 16.9 | 19.8 |
| Elongation at break (%) | 210 | 185 | 160 | 145 |
| Flexural modulus (MPa) | 360 | 305 | 260 | 585 |
| | | | | |
| Extrusion tape 1 | smooth | smooth | smooth | smooth |
| Extrusion Tape 2 | smooth | smooth | rough | smooth |

### Example 3

The polymer blends in Table III demonstrate the use of a copolyester-ether copolymer that has undergone solid-state polymerization to increase molecular weight, blended with polyacrylate copolymer. Examples E6 and E7 were prepared according to the process in Example 1. Tape extrusion used a temperature profile of 200°C, 210°C, and 220°C (feed zone to discharge) and a tape die with a temperature setting of 220°C.

The results in Table III show that E6, using polyethylene/acrylate rubber, has higher strength and extensibility than E7 based on polyacrylate copolymer. Both E6 and E7 exhibit good tape extrusion characteristics with no degradation of surface finish between Tapes 1 and 2, though E6 presents a smooth finish while E7 has a matte finish. Both are acceptable, though in certain applications one or the other may be preferred.

**Table III**

| | E6 | E7 |
|---|---|---|
| | wt% | wt% |
| Copolyester-ether C | 69.63 | 69.63 |
| Polyethylene/acrylate rubber B | 29.83 | |
| Polyacrylate copolymer A | | 29.83 |
| Aminosilane A | 0.47 | 0.47 |
| DBU catalyst | 0.07 | 0.07 |
| | | |
| mols amine/Kg of elastomer | 0.071 | 0.071 |
| | | |
| Shore D hardness (peak) | 37 | 37 |
| Tensile at break (MPa) | 16.6 | 13 |
| Elongation at break (%) | 275 | 210 |
| | | |
| Extrusion tape 1 | smooth | matte |
| Extrusion Tape 2 | smooth | matte |

## Claims

1. A polymer blend comprising:
(a) a copolyether-ester copolymer comprising copolymerized residues of a polyalkylene terephthalate and copolymerized residues of a polyether diol; and
(b) the reaction product of a polyacrylate copolymer with an aminosilane; wherein
i) the polyacrylate copolymer comprises at least 0.3 wt% of copolymerized residues of a cure site comonomer, wherein the sum of the weight percentages of the copolymerized residues in the polyacrylate copolymer is 100 wt%; and wherein
ii) the polymer blend comprises from 5 to 70 wt% of the reaction product of the polyacrylate copolymer with the aminosilane, based on the total weight of the polymer blend.

2. The polymer blend of claim 1, wherein the copolyether-ester copolymer comprises copolymerized units of polybutylene phthalate.

3. The polymer blend of claim 1 or claim 2, wherein the copolyether-ester copolymer comprises from about 5 to about 80 wt% of copolymerized residues of one or more polyether diols, based on the total weight of the copolyether-ester copolymer.

4. The polymer blend of claim 1 or claim 2, wherein the copolyether-ester copolymer further comprises copolymerized residues of a polyalkylene isophthalate, preferably wherein the copolyether-ester copolymer comprises copolymerized units of polybutylene isophthalate.

5. The polymer blend of any preceding claim, wherein the polyacrylate copolymer further comprises copolymerized residues of ethylene.

6. The polymer blend of any preceding claim, wherein the polyacrylate copolymer comprises 0.3 to 10 wt% of copolymerized residues derived from one or more cure site comonomers; 45 to 80 wt% of copolymerized residues derived from one or more alkyl acrylates; and 10 to 55 wt% of copolymerized residues derived from ethylene, based on the total weight of the polyacrylate copolymer, wherein the sum of the weight percentages of all the copolymerized residues in the polyacrylate copolymer is 100 wt%.

7. The polymer blend of any preceding claim, wherein the aminosilane is represented by the formula YNHBSi(OR)ₐ(X)₃₋ₐ, wherein a is an integer equal to 1, 2 or 3; Y is a hydrogen atom or an alkyl, alkenyl, hydroxy alkyl, alkaryl, alkylsilyl, alkylamine, C(=O)OR or C(=O)NR group; R is an acyl, alkyl, aryl or alkaryl group; X is R or a halogen atom; and B is a divalent bridging group, wherein preferably the aminosilane comprises one or more compounds selected from the group consisting of (3-aminopropyl)trimeth-oxysilane, (3-aminopropyl)triethoxysilane, N-β-(aminoethyl)-γ-aminopropyl-trimethoxysilane, N-(β-aminoethyl)-γ-aminopropylmethyldimethoxysilane, vinylbenzylaminoethylamino-propyltrimethoxysilane, and bis(trimethoxysilylpropyl)amine, more preferably wherein the aminosilane is 3-aminopropyltriethoxysilane, 3-aminopropyltrimethoxysilane, or a combination of 3-aminopropyltriethoxysilane and 3-aminopropyl-trimethoxysilane.

8. The polymer blend of any preceding claim, further comprising one or more other components selected from the group consisting of additives, fillers, process aids, plasticizers, stabilizers, viscosity modifiers, colorants, pigments, and anti-oxidants, wherein the anti-oxidant preferably is selected from the group consisting of phenolic, phosphite, and amine-containing anti-oxidants.

9. The polymer blend of any preceding claim that comprises a thermoplastic vulcanizate.

10. A polymer blend of any preceding claim comprising at least an effective amount of a catalyst to accelerate the reaction of amine with the cure site of the polyacrylate copolymer, wherein preferably the catalyst is a tertiary amine, more preferably 1,8-diazabicyclo[5.4.0]undec-7-ene (DBU).

11. A process for making the polymer blend of any preceding claim, comprising the steps of:
a) mixing one or more polyacrylate copolymers with aminosilane to form a composition; and
b) melt mixing one or more copolyether-ester copolymers with the composition.

12. The process of claim 11 wherein step (a) takes place at a temperature less than 150°C, and/or wherein step (b) takes place at a temperature of 150°C of greater, and/or wherein steps (a) and (b) occur sequentially in a twin screw extruder.

13. A process for making the polymer blend of any of claims 1 through 10, comprising the steps of:
a) melt mixing one or more polyacrylate copolymers with one or more copolyether-ester copolymers; and
b) melt mixing the composition of part (a) with aminosilane.

14. A process for making the polymer blend of any of claims 1 through 10, wherein the polyacrylate copolymer is combined with the aminosilane and the copolyether-ester copolymer in a melt to form a melt comprising the copolyether-ester copolymer and the reaction product of the polyacrylate copolymer with the aminosilane, and wherein the melt is cooled to form the polymer blend.

15. An article comprising the polymer blend of any of claims 1 through 10, said article being selected from the group consisting of consumer electronics, including power cord jacketing and strain relief; consumer goods, including footwear outsoles and midsoles; soft touch overmolding for power tools and other hand held devices; wearable applications such as straps or bands; sealing applications such as automotive air intake manifold gaskets; wire and cable applications, such as jacketing; oil and gas flat packs; boots for use in transportation vehicles such as automobiles, including inboard and outboard constant-velocity joint (CVJ) boots, propeller shaft boots, and diaphragm boots; fluid ducts and air ducts for use in transportation vehicles such as automobiles; and other articles for use in the transportation, automotive, fluid power (including fluid power transmission lines), electrical, electronic, hose and tubing, and appliance fields,
wherein preferably the article is produced by a method selected from the group consisting of injection molding, blow molding, extrusion, compression molding, press-blow molding, accumulator blow molding, extrusion blow molding, injection-blow molding, and additive manufacturing.

## Patentansprüche

1. Polymermischung umfassend:
(a) ein Copolyetherestercopolymer umfassend copolymerisierte Reste eines Polyalkylenterephthalats und copolymerisierte Reste eines Polyetherdiols; und
(b) das Reaktionsprodukt eines Polyacrylatcopolymers mit einem Aminosilan;
wobei
i) das Polyacrylatcopolymer mindestens 0,3 Gew.-% copolymerisierter Reste eines Aushärtungsortcomonomers umfasst, wobei die Summe der Gewichtsprozentsätze der copolymerisierten Reste in dem Polyacrylatcopolymer 100 Gew.-% beträgt; und wobei
ii) die Polymermischung 5 bis 70 Gew.-% des Reaktionsprodukts des Polyacrylatcopolymers mit dem Aminosilan, auf das Gesamtgewicht der Polymermischung bezogen, umfasst.

2. Polymermischung nach Anspruch 1, wobei das Copolyetherestercopolymer copolymerisierte Einheiten von Polybutylenphthalat umfasst.

3. Polymermischung nach Anspruch 1 oder Anspruch 2, wobei das Copolyetherestercopolymer etwa 5 bis etwa 80 Gew.-% copolymerisierter Reste von einem oder mehreren Polyetherdiolen, auf das Gesamtgewicht des Copolyetherestercopolymers bezogen, umfasst.

4. Polymermischung nach Anspruch 1 oder Anspruch 2, wobei das Copolyetherestercopolymer ferner copolymerisierte Reste eines Polyalkylenisophthalats umfasst, bevorzugt wobei das Copolyetherestercopolymer copolymerisierte Einheiten von Polybutylenisophthalat umfasst.

5. Polymermischung nach einem vorhergehenden Anspruch, wobei das Polyacrylatcopolymer ferner copolymerisierte Reste von Ethylen umfasst.

6. Polymermischung nach einem vorhergehenden Anspruch, wobei das Polyacrylatcopolymer 0,3 bis 10 Gew.-% copolymerisierter Reste, die von einem oder mehreren Aushärtungsortcomonomeren abgeleitet sind, 45 bis 80 Gew.-% copolymerisierter Reste, die von einem oder mehreren Alkylacrylaten abgeleitet sind, und 10 bis 55 Gew.-% copolymerisierter Reste, die von Ethylen abgeleitet sind, auf das Gesamtgewicht des Polyacrylatcopolymers bezogen, umfasst, wobei die Summe der Gewichtsprozentsätze aller copolymerisierten Reste in dem Polyacrylatcopolymer 100 Gew.-% beträgt.

7. Polymermischung nach einem vorhergehenden Anspruch, wobei das Aminosilan durch die Formel YNHBSi(OR)ₐ(X)₃₋ₐ dargestellt ist, wobei a eine ganze Zahl gleich 1, 2 oder 3 ist; Y ein Wasserstoffatom oder eine Alkyl-, Alkenyl-, Hydroxyalkyl-, Alkaryl-, Alkylsilyl-, Alkylamin-, C(=O)OR- oder C(=O)NR-Gruppe ist; R eine Acyl-, Alkyl-, Aryl- oder Alkarylgruppe ist; X R oder ein Halogenatom ist; und B eine zweiwertige Überbrückungsgruppe ist, wobei bevorzugt das Aminosilan eine oder mehrere Verbindungen umfasst ausgewählt aus der Gruppe bestehend aus (3-Aminopropyl)trimethoxysilan, (3-Aminopropyl)triethoxysilan, N-β-(Aminoethyl)-γ-aminopropyltrimethoxysilan, N-(β-Aminoethyl)-γ-aminopropylmethyldimethoxysilan, Vinylbenzylaminoethylaminopropyltrimethoxysilan und Bis(trimethoxysilylpropyl)amin, noch bevorzugter wobei das Aminosilan 3-Aminopropyltriethoxysilan, 3-Aminopropyltrimethoxysilan oder eine Kombination von 3-Aminopropyltriethoxysilan und 3-Aminopropyltrimethoxysilan ist.

8. Polymermischung nach einem vorhergehenden Anspruch, ferner ein oder mehrere andere Komponenten umfassend, ausgewählt aus der Gruppe bestehend aus Zusatzstoffen, Füllstoffen, Verarbeitungshilfsmitteln, Weichmachern, Stabilisatoren, Viskositätsmodifiziermitteln, Farbmitteln, Pigmenten und Antioxidationsmitteln, wobei das Antioxidationsmittel bevorzugt aus der Gruppe ausgewählt ist bestehend aus phenolischen, Phosphit- und aminhaltigen Antioxidationsmitteln.

9. Polymermischung nach einem vorhergehenden Anspruch, die ein thermoplastisches Vulkanisat umfasst.

10. Polymermischung nach einem vorhergehenden Anspruch, die mindestens eine wirksame Menge eines Katalysators umfasst, um die Reaktion von Amin mit dem Aushärtungsort des Polyacrylatcopolymers zu beschleunigen, wobei der Katalysator bevorzugt ein tertiäres Amin, noch bevorzugter 1,8-Diazabicyclo[5.4.0]undec-7-en (DBU) ist.

11. Verfahren zum Herstellen der Polymermischung nach einem vorhergehenden Anspruch, umfassend die Schritte des:
a) Mischens eines oder mehrerer Polyacrylatcopolymere mit Aminosilan, um eine Zusammensetzung zu bilden; und
b) Schmelzmischens eines oder mehrerer Copolyetherestercopolymere mit der Zusammensetzung.

12. Verfahren nach Anspruch 11, wobei der Schritt (a) bei einer Temperatur von weniger als 150 °C erfolgt, und/oder wobei der Schritt (b) bei einer Temperatur von 150°C oder höher erfolgt, und/oder wobei die Schritte (a) und (b) nacheinander in einem Doppelschneckenextruder stattfinden.

13. Verfahren zum Herstellen der Polymermischung nach einem der Ansprüche 1 bis 10, das die Schritte umfasst des:
a) Schmelzmischens eines oder mehrerer Polyacrylatcopolymere mit einem oder mehreren Copolyetherestercopolymeren; und
b) Schmelzmischens der Zusammensetzung von Teil (a) mit Aminosilan.

14. Verfahren zum Herstellen der Polymermischung nach einem der Ansprüche 1 bis 10, wobei das Polyacrylatcopolymer mit dem Aminosilan und dem Copolyetherestercopolymer in einer Schmelze kombiniert wird, um eine Schmelze zu bilden, die das Copolyetherestercopolymer und das Reaktionsprodukt des Polyacrylatcopolymers mit dem Aminosilan umfasst, und wobei die Schmelze gekühlt wird, um die Polymermischung zu bilden.

15. Artikel, umfassend die Polymermischung nach einem der Ansprüche 1 bis 10, wobei der Artikel aus der Gruppe ausgewählt wird bestehend aus Verbraucherelektronik, einschließlich Netzkabelumhüllungen und -zugentlastung; Konsumgüter, einschließlich Schuhwerklaufsohlen und -zwischensohlen; einer weichen Umspritzung für Elektrowerkzeuge und andere Handvorrichtungen; tragbaren Einrichtungen wie Riemen oder Bänder; Abdichteinrichtungen wie Fahrzeugluftansaugkrümmerdichtungen; Draht- und Kabeleinrichtungen wie Umhüllungen; Öl- und Gasflachgehäusen; Muffen zur Verwendung in Transportfahrzeugen wie Automobilen, einschließlich Innenbord- und Außenbord-Gleichlaufgelenk-(CVJ-)Muffen, Propellerwellenmuffen und Deckenscheibenmuffen; Flüssigkeits- und Luftrohrleitungen zur Verwendung in Transportfahrzeugen wie Automobilen; und anderen Artikeln zur Verwendung beim Transport, in Fahrzeugen, in der Fluidtechnik (einschließlich Fluidtechnikübertragungsleitungen), in elektrischen, elektronischen, Schlauch- und Verschlauchungs- und Haushaltsgerätegebieten,
wobei der Artikel bevorzugt durch ein Verfahren produziert wird, ausgewählt aus der Gruppe bestehend aus Spritzgießen, Blasformen, Extrudieren, Formpressen, Presseblasformen, Akkumulatorblasformen, Extrusionsblasformen, Spritzblasformen und additiver Fertigung.

## Revendications

1. Mélange de polymères comprenant :
(a) un copolymère de copolyéther-ester comprenant des résidus copolymérisés d'un poly(téréphtalate d'alkylène) et des résidus copolymérisés d'un polyéther diol ; et
(b) le produit de réaction d'un copolymère de polyacrylate avec un aminosilane ; dans lequel :
i) le copolymère de polyacrylate comprend au moins 0,3 % en poids de résidus copolymérisés d'un comonomère à site de durcissement, dans lequel la somme des pourcentages en poids des résidus copolymérisés dans le copolymère de polyacrylate est de 100 % en poids ; et dans lequel
ii) le mélange de polymères comprend de 5 à 70 % en poids du produit de réaction du copolymère de polyacrylate avec l'aminosilane, rapporté au poids total du mélange de polymères.

2. Mélange de polymères selon la revendication 1, dans lequel le copolymère de copolyéther-ester comprend des unités copolymérisées de polyphtalate de butylène.

3. Mélange de polymères selon la revendication 1 ou la revendication 2, dans lequel le copolymère de copolyéther-ester comprend d'environ 5 à environ 80 % en poids de résidus copolymérisés d'un ou de plusieurs polyéther diols, rapporté au poids total du copolymère de copolyéther-ester.

4. Mélange de polymères selon la revendication 1 ou la revendication 2, dans lequel le copolymère de copolyéther-ester comprend en outre des résidus copolymérisés de poly(isophtalate d'alkylène), préférablement dans lequel le copolymère de copolyéther-ester comprend des unités copolymérisées de poly(isophtalate de butylène).

5. Mélange de polymères selon l'une quelconque des revendications précédentes, dans lequel le copolymère de polyacrylate comprend en outre des résidus copolymérisés d'éthylène.

6. Mélange de polymères selon l'une quelconque des revendications précédentes, dans lequel le copolymère de polyacrylate comprend 0,3 à 10 % en poids de résidus copolymérisés issus d'un ou de plusieurs comonomères à site de durcissement, 45 à 80 % en poids de résidus copolymérisés issus d'un ou de plusieurs acrylates d'alkyle, et 10 à 55 % en poids de résidus copolymérisés issus d'éthylène, rapporté au poids total du copolymère de polyacrylate, dans lequel la somme des pourcentages en poids de tous les résidus copolymérisés dans le copolymère de polyacrylate est de 100 % en poids.

7. Mélange de polymères selon l'une quelconque des revendications précédentes, dans lequel l'aminosilane est représenté par la formule YNHBSi(OR)ₐ(X)₃₋ₐ, dans lequel a est un entier égal à 1, 2 ou 3 ; Y est un atome d'hydrogène ou un groupe alkyle, alcényle, hydroxyalkyle, alkaryle, alkylsilyle, alkylamine, C(=O)OR ou C(=O)NR ; R est un groupe acyle, alkyle, aryle ou alkaryle ; X est R ou un atome d'halogène ; et B est un groupe de pontage divalent, dans lequel préférablement l'aminosilane comprend un ou plusieurs composés sélectionnés parmi le groupe constitué par le (3-aminopropyl)triméthoxysilane, le (3-aminopropyl)triéthoxysilane, le N-β-(aminoéthyl)-γ-aminopropyltriméthoxysilane, le N-(β-aminoéthyl)-γ-aminopropylméthyldiméthoxysilane, le vinylbenzylaminoéthylaminopropyltriméthoxysilane et le bis(triméthoxysilylpropyl)amine, plus préférablement dans lequel l'aminosilane est un 3-aminopropyltriéthoxysilane, un 3-aminopropyltriméthoxysilane ou une combinaison de 3-aminopropyltriéthoxysilane et de 3-aminopropyltriméthoxysilane.

8. Mélange de polymères selon l'une quelconque des revendications précédentes, comprenant en outre un ou plusieurs autres constituants sélectionnés parmi le groupe constitué d'additifs, de charges, dd'agents de traitement, de plastifiants, de stabilisants, de modificateurs de viscosité, de colorants, de pigments, et d'antioxydants, dans lequel l'antioxydant est sélectionné préférablement parmi le groupe constitué d'antioxydants phénoliques, de phosphite et contenant une amine.

9. Mélange de polymères selon l'une quelconque des revendications précédentes, qui comprend un vulcanisat thermoplastique.

10. Mélange de polymères selon l'une quelconque des revendications précédentes, comprenant au moins une quantité efficace d'un catalyseur pour accélérer la réaction de l'amine avec le site de durcissement du copolymère de polyacrylate, dans lequel le catalyseur est préférablement une amine tertiaire, plus préférablement du 1,8-diazabicyclo[5.4.0]undéc-7-ène (DBU).

11. Procédé de fabrication du mélange de polymères selon l'une quelconque des revendications précédentes, comprenant les étapes suivantes :
a) mélange d'un ou de plusieurs copolymères de polyacrylate avec de l'aminosilane pour former une composition ; et
b) mélange par fusion d'un ou de plusieurs copolymères de copolyéther-ester avec la composition.

12. Procédé selon la revendication 11, dans lequel l'étape (a) est réalisée à une température inférieure à 150 °C, et/ou dans lequel l'étape (b) est réalisée à une température égale ou supérieure à 150 °C, et/ou dans lequel les étapes (a) et (b) se produisent successivement dans une extrudeuse à double vis.

13. Procédé de fabrication du mélange de polymères selon l'une quelconque des revendications 1 à 10, comprenant les étapes suivantes :
a) mélange par fusion d'un ou de plusieurs copolymères de polyacrylate avec un ou plusieurs copolymères de copolyéther-ester ; et
b) mélange par fusion de la composition de la partie (a) avec de l'aminosilane.

14. Procédé de fabrication du mélange de polymères selon l'une quelconque des revendications 1 à 10, dans lequel le copolymère de polyacrylate est combiné avec l'aminosilane et le copolymère de copolyéther-ester dans une masse fondue pour former une masse fondue comprenant le copolymère de copolyéther-ester et le produit de réaction du copolymère de polyacrylate avec l'aminosilane, et dans lequel la masse fondue est refroidie pour former le mélange de polymères.

15. Article comprenant le mélange de polymères selon l'une quelconque des revendications 1 à 10, ledit article étant sélectionné dans le groupe constitué des appareils électroniques grand public, incluant des gainages et des serre-câbles de cordon d'alimentation ; des biens de consommation incluant des semelles extérieures et des semelles intercalaires d'article chaussant ; d'un surmoulage doux au toucher pour outils électriques et autres dispositifs portatifs ; des dispositifs pouvant être portés tels que des sangles ou des bandes ; des dispositifs d'étanchéité tels que des joints de collecteur d'admission d'air automobile ; des dispositifs pour fil et câble tels qu'un gainage ; des emballages plats pour huile et gaz ; des soufflets pour une utilisation dans des véhicules de transport comme des automobiles, incluant des soufflets de joints homocinétiques (CVJ) intérieurs et extérieurs, des soufflets d'arbre de transmission, et des soufflets à diaphragme ; des conduits de fluide et des conduits d'air destinés à une utilisation dans des véhicules de transport, tels que des automobiles ; et d'autres articles pour une utilisation dans les domaines du transport, de l'automobile, de la transmission d'énergie par fluide (incluant des conduites de transmission hydraulique), de l'électricité, de l'électronique, des tuyaux et tubulures, et des appareils électroménagers,
préférablement dans lequel l'article est produit par un procédé sélectionné parmi le groupe constitué par le moulage par injection, le moulage par soufflage, l'extrusion, le moulage par compression, le moulage par soufflage sous presse, le moulage par soufflage à tête d'accumulateur, le moulage par extrusion-soufflage, le moulage par injection-soufflage, et la fabrication additive.
